# EUROPÄISCHE PATENTSCHRIFT

(11) **EP 0 854 840 B1**
(45) Veröffentlichungstag und Bekanntmachung des Hinweises auf die Patenterteilung: **12.01.2000**
(21) Anmeldenummer: 96931944.1
(22) Anmeldetag: 11.10.1996
(51) Int. Cl.: C01D 3/06, C02F 1/04, C02F 1/16, B01D 1/00

(54) **VERFAHREN UND VORRICHTUNG ZUR SALZGEWINNUNG**
SALT EXTRACTION PROCESS AND DEVICE
PROCEDE ET DISPOSITIF D'EXTRACTION DE SEL

(30) Priorität: 11.10.1995 ES 9501975
(43) Veröffentlichungstag der Anmeldung: 29.07.1998
(73) Patentinhaber: KREBS & Co. AG, CH-8022 Zürich (CH)
(72) Erfinder: GRACIA CORNIEL, Vicente, E-08034 Barcelona (ES)
(74) Vertreter: Patentanwaltsbüro Feldmann AG
(86) Internationale Anmeldenummer: IB9601084
(87) Internationale Veröffentlichungsnummer: WO9713722

(56) Entgegenhaltungen:
- FR-A- 2 450 785
- US-A- 3 490 513

## Beschreibung

Die vorliegende Erfindung betrifft ein Verfahren zur Salzgewinnung gemäss Oberbegriff des Patentanspruches 1 und eine Vorrichtung zur Durchführung des Verfahrens gemäss Oberbegriff des Patentanspruches 9.

Aus R.B.Richards, Grainer Salt (D.Kaufmann, Sodium Chlorid, 1960, Chapter 12) ist ein Verfahren zur Gewinnung von Salz aus einer in einem offenen Absetz- oder Verdunstungsbecken befindlichen Salzsole bekannt. Um den Verdunstungsprozess zu beschleunigen, wird die Sole auf eine Temperatur knapp unterhalb der Siedepunktes erwärmt, typischerweise auf 90-100°C. Dabei sind zwei unterschiedliche Vorgehensweisen bekannt. In der ersten Art wird die Salzsole mittels Heizröhren erwärmt, welche innerhalb des Absetzbeckens verlaufen. In der anderen Art wird die Sole kontinuierlich in einem Kreislauf durch eine externe Heizeinheit geleitet und in das Verdunstungsbecken zurückgeführt. Eine derartige Variante des Grainer-Verfahrens ist in US-A-2'660'236 beschrieben.
Eine weitere Variante des Grainer-Verfahrens ist in US-A-2'555'340 offenbart. Hier wird nicht mittels eines Warmetauschers geheizt, sondern die zu erwärmende Sole wird einem direkten Dampfstrahl ausgesetzt.

Das Grainer-Verfahren weist mehrere Nachteile auf. Der aufzubringende Energiewert ist relativ hoch, insbesondere da die Salzsole auf eine Temperatur knapp unterhalb des Siedepunktes erwärmt wird. Deshalb wurde dieses Verfahren vorallem in Michigan eingesetzt, wo in den Sägewerken Wärme in Form von Dampf zur Verfügung stand. Ferner hängt die Wirksamkeit des Verfahrens stark von den klimatischen Bedingungen ab. In Gebieten mit hohen Temperaturen und/oder hoher Luftfeuchtigkeit wird das Grainer-Verfahren aus wirtschaftlichen Ueberlegungen nicht angewendet, da die Salzausbeute die Kosten zur Betreibung der Anlage nicht rechtfertigen. Ein weiterer Nachteil ist, dass das gewonnene Salz plättchenförmig und feinkörnig, das heisst mit einem Durchmesser von weniger als 2 mm, ist.

Aus FR-A-2'447'218 ist ferner ein Verfahren zur Salzgewinnung offenbart, welches die Bildung von grösseren Salzkristallen ermöglicht als das bekannte Grainer-Verfahren, trotzdem jedoch einen höheren Ertrag erbringt als die lediglich durch Sonneneinstrahlung betriebenen Salinen. Auch hier wird ein offenes, der Sonneneinstrahlung ausgesetztes Verdunstungsbecken verwendet, jedoch wird zusätzlich in eine untere Schicht des Verdunstungsbeckens eine erwärmte Nährlösung mit vorgegebener Konzentration eingeleitet, um die Löslichkeit in dieser unteren Schicht zu verändern.

EP-A-0'009'506 beschreibt ein Verfahren zur Salzgewinnung in einem Turm aus einem permeablen Material, über den Meerwasser mittels einer Sprinkleranlage versprüht wird. Der verdampfte Anteil wird gesammelt, mit Rohsalz versetzt und wiederholt über den Turm gesprüht. Dieses Verfahren ist aufwendig und mässig effizient.

Die **FR-A-2'450'785** beschreibt ein Verfahren zur Trennung einer Substanz aus einer Lösung, bei dem in einem ersten Schritt die Konzentration der Lösung erhöht und die Lösung anschliessend erwärmt wird. Diese aufkonzentrierte erwärmte Lösung wird anschliessend über ein Verdunstungsbecken versprüht, wobei mittels eines Ventilators eine ausreichende Luftzirkulation gewährleistet werden soll.

Aus der **US-A-3'490'513** ist ein Salzgewinnungsverfahren bekannt, bei dem die Sole mittels Erdwärme auf eine vorbestimmte Temperatur erwärmt und anschliessend über ein Becken versprüht wird.

In DE-A-36'12'188 ist ferner eine solare Meerwasser-Entsalzungsanlage beschrieben, welche ein geschlossenes, von äusseren Umwelteinflüssen unabhängiges System bildet. Meerwasser wird in einem Wärmespeicher aufgewärmt und anschliessend mittels einer Sprühvorrichtung über Gradierwerke versprüht. In den Gradierwerken verdunstet das Wasser, welches aufsteigt und sich an den Wänden der Anlage wieder abkühlt und als salzfreies Kondensat aufgefangen wird. Diese Anlage hat den Vorteil, dass sie lediglich Sonnenenergie benötigt. Sie ist jedoch wegen der schwachen Salz-Konzentration des eingeleiteten Meerwassers zur Salzgewinnung nicht geeignet.

Es ist deshalb Aufgabe der Erfindung, ein Verfahren zur Salzgewinnung zu schaffen, welches mit kostengünstiger Energie eine hohe Effizienz erzielt und Schwankungen in den klimatischen Bedingungen ausgleicht.

Diese Aufgabe löst ein Verfahren mit den Merkmalen des Patentanspruches 1 sowie eine Vorrichtung mit den Merkmalen des Patentanspruches 9.

Es ist ferner eine Aufgabe der Erfindung, ein Verfahren zur Salzgewinnung zu schaffen, welches ferner nicht nur die Abwärme einer Industrieanlage verwendet, sondern auch den Grad ihrer Rückkühlung regelt.

Diese Aufgabe löst ein Verfahren mit den Merkmalen des Patentanspruches 2.

Die im erfindungsgemässen Verfahren verwendete Salzsole, welche über das Verdunstungsbecken versprüht wird, ist konzentriert, bevorzugterweise gesättigt. Das Verfahren lässt sich jedoch auch mit ungsättigter oder vorverdampfter Sole durchführen. Die Salzsole kann vorgängig gereinigt sein oder in ungereinigter Form verwendet werden. Salzsole, welche mit dem ASR-Verfahren der Anmelderin zur Reduktion von gelöstem Kalziumsulfat-Anhydrid (CaSO₄) vorbehandelt ist, ist besonders geeignet. Das erfindungsgemässe Verfahren lässt sich mit allen Arten von Salzsolen durchführen, wobei die unten angeführten Beispiele Natriumchlorid (NaCl) betreffen.

Das erfindungsgemässe Verfahren wird wie das Grainer-Verfahren mit offenen Salzsolebecken durchgeführt, so dass der Verdunstungsprozess durch Sonneneinstrahlung und Windeinwirkung verursacht wird. Mindestens ein Teil der Sole wird erwärmt, wobei die hierfür notwendige Energie von der Abwärme industrieller Anlagen irgendwelcher Art herrührt. Ein Teil davon wird über das Verdunstungsbecken versprüht, der Rest wird direkt in das Verdunstungsbecken zurückgeleitet. Bevorzugterweise wird auch der restliche Teil der Salzsole erwärmt, um den Verdunstungsprozess zu beschleunigen. Diese Erwärmung kann gemeinsam mit dem zu versprühenden Anteil der Salzsole und in derselben Heizvorrichtung oder in einer hiervon getrennten Vorrichtung erfolgen. Die getrennte Heizvorrichtung ist bevorzugterweise entweder ein externer oder ein innerhalb des Verdunstungsbeckens verlaufender Wärmetauscher.

Durch das zusätzliche Versprühen von erwärmter Sole über dem Verdunstungsbecken lassen sich die schwankenden Umwelteinflüsse, wie Umgebungstemperatur, Luftfeuchtigkeit und Windgeschwindigkeit ausgleichen, indem die Menge der versprühten Sole entsprechend den gemessenen Klimadaten angepasst wird. Somit lassen sich, dank dem erfindungsgemassen Verfahren, offene Salzgewinnungsanlagen auch in klimatisch für die offene Salzproduktion nicht optimalen Lagen betreiben.
Das erfindungsgemässe Verfahren erlaubt des weiteren den Bau von tieferen Verdunstungsbecken als bei den konventionellen, offenen Salinen. Da die Verdunstungsbecken somit eine kleinere Oberfläche aufweisen, sind sie weniger stark dem Regen ausgesetzt. Dies wiederum ermöglicht den Bau von Salzgewinnungsanlagen regenanfälligeren Gegenden und ermöglicht zudem die Verwendung der Verdunstungsbecken als Salzlager. Die Verwendung des Verdunstungsbeckens als Salzlager wird auch dadurch ermöglicht, dass im Gegensatz zum Grainer-Verfahren eine kontinuierliche Ernte des Salzes nicht zwingend notwendig ist.

Zusätzlich zu der erwärmten Sole wird in einer bevorzugten Variante des Verfahrens nicht erwärmte Sole versprüht. Dies ist vorallem dann der Fall, wenn die Rückkühlung der Abwärme bereits den gewünschten Wert erzielt, die klimatischen Bedingungen jedoch eine zusätzliche Steigerung der Salzproduktion durch Versprühen von Sole ermöglichen.

Bevorzugterweise werden mehrere Verdunstungsbecken in Serie geschaltet, wobei der Ueberlauf eines Beckens in das nächstliegende Becken erfolgt. Dadurch lässt sich in den einzelnen Becken Salz von unterschiedlicher Qualität erzeugen. In einer anderen Variante ist das Verdunstungsbecken unterteilbar gebaut. Die einem Verdunstungsbecken entnommene, aufgewärmte Sole lässt sich zudem wiederum in dasselbe oder auch in eine anderes Becken zurücksprühen. Ferner hat sich gezeigt, dass ein ständiger Ueberlauf oder eine Rückführung zu einer Solereinigungsanlage einer kleinen Menge an Sole aus dem Verdunstungsbecken die Konzentration von insbesondere gut wasserlöslichen Verunreinigungen im gewonnenen Salz minimiert.

Dank der versprühten Salzsole lässt sich nicht nur die Salzproduktion beeinflussen, sondern die Wärmeabfuhr oder Rückkühlung der Industrieanlage wird geregelt, wobei das Verdunstungsbecken zur Salzgewinnung als Sprühkühlteich der Rückkühlung wirkt.

Welche Menge an Salzsole versprüht werden soll, berechnet sich aus einem optimierten Gleichgewicht der folgenden zwei Bedingungen: einerseits soll die Abwärme der Industrieanlage abgeführt werden, das heisst im allgemeinen, dass das durch Abwärme erhitzte Kühlwasser auch bei widrigen klimatischen Bedingungen auf eine definierte Temperatur rückgekühlt werden soll. Andererseits soll der Verdunstungsprozess zur Salzgewinnung entsprechend den klimatischen Bedingungen optimiert werden.

Im erfindungsgemässen Verfahren lässt sich mit niedrigeren Temperaturen als beim Grainer-Verfahren arbeiten, so dass die verschiedensten Industriezweige zur Lieferung der Abwärme in Frage kommen. Typischerweise beträgt die Temperatur der Abwärme 40°-100° C. Die Salzsole wird somit auf Temperaturen im Bereich von 35° - 80° C aufgewärmt. Da die Salzsole auf eine deutlich unterhalb des Siedepunktes liegende Temperatur erwärmt wird, wird bei der Verdunstung grobkörniges Salz erhalten. Typische Korngrössen sind 2-10 mm. Die Salzkörner weisen im allgemeinen eine kubische Gestalt auf. Das im erfindungsgemässen Verfahren gewonnene Salz ist deshalb einfacher weiterzuverarbeiten als das aus dem Grainer-Verfahren erhaltene, feinkörnige Salz. Für die Weiterverarbeitung geeignet ist insbesondere das unter dem Namen SALEX® bekannte Aufbereitungsverfahren der Anmelderin.

Ein Anwendungsbeispiel des erfindungsgemässen Verfahrens ist die Kopplung einer Rückkühlung der Abwärme eines mit Methangas betriebenen Elektrizitätswerks und die Gewinnung von Salz aus einem Salzbergwerk. Das Salz wird mittels Wasser aus den Salzkavernen geschwemmt und als Salzsole in die Verdunstungsbecken geleitet, wo das Wasser mittels dem erfindungsgemässen Verfahren verdunstet wird. Die nun geleerten Kavernen werden zur Methangaslagerung verwendet, wobei die bei der Stromerzeugung anfallende Abwärme zur Erwärmung der Salzsole eingesetzt wird.

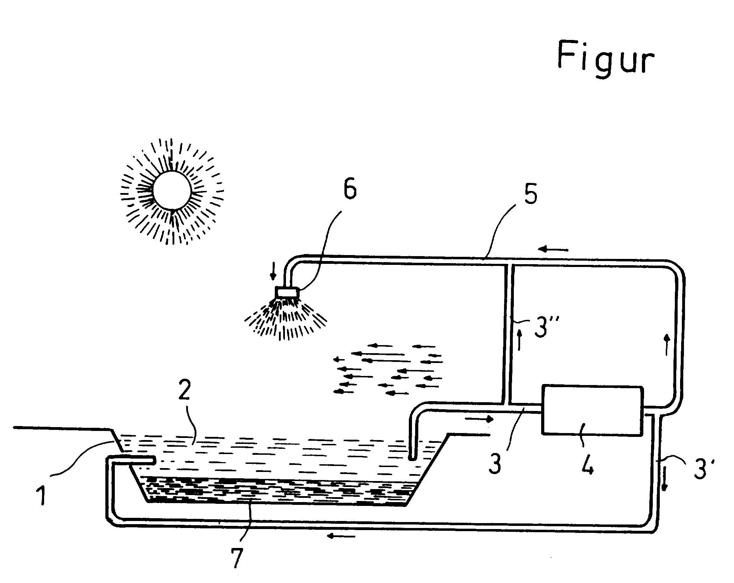

In der beiliegenden Zeichnung ist schematisch eine Salzgewinnungsanlage dargestellt, welche nach dem erfindungsgemässen Verfahren arbeitet.

Die Salzgewinnungsanlage umfasst ein oder mehrere offene Verdunstungsbecken 1. Bevorzugterweise weisen die Verdunstungsbecken eine beträchtlich grössere Ausdehnung in der einen Richtung auf als in der anderen. Sie sind bevorzugterweise so angeordnet, dass die allgemeine Windrichtung quer zur Längsrichtung der Verdunstungsbecken verläuft.

Das mindestens eine Verdunstungsbecken 1 wird zu Beginn des Verfahrens mit Salzsole 2 gefüllt. Die Salzsole weist dabei eine Konzentration von 3 bis 26 Gewichtsprozent Natriumchlorid (NaCl), bevorzugterweise annähernd 26 Gewichtsprozent NaCl auf. Mindestens ein Teil der Salzsole 2 wird über Leitungen 3 aus dem Verdunstungsbecken 1 in eine externe Heizeinheit 4 geleitet, welche mit der Abwärme einer Industrieanlage betrieben wird.

In dieser Heizeinheit 4, welche bevorzugterweise durch einen Wärmetauscher gebildet ist, wird die Salzsole je nach der zur Verfügung stehenden Energie auf 35° bis 80°C erwärmt. Die Heizeinheit 4 wird in diesen Beispielen mittels des Kühlwassers eines Blockheizkraftwerkes betrieben. Typischerweise beträgt die Temperatur des zu kühlenden Kühlwassers circa 90°C und lässt sich mittels dem erfindungsgemässen Verfahren auf 20°-50°C rückkühlen.

Ein Teil der erwärmten Salzsole wird über eine Rückleitung 3' in das Verdunstungsbecken 1 zurückgeleitet. Der restliche Teil wird über regelbare Ventile in einer Sprühleitung 5 zu einer Sprühvorrichtung 6 gepumpt, wo die erwärmte Salzsole über dasselbe oder ein benachbartes Verdunstungsbecken 1 versprüht wird. Zusätzlich wird in Abhängigkeit der klimatischen Bedingungen nichterwärmte Sole über das Verdunstungsbecken 1 versprüht. Hierfür ist eine Bypass-Leitung 3" vom Verdunstungsbecken zur Sprühvorrichtung vorhanden, welche die Heizvorrichtung umgeht. Das Salz 7 kristallisiert am Boden des Verdunstungsbeckens 1 und kann, nachdem die restliche Salzsole aus dem Verdunstungsbecken abgepumpt worden ist, entfernt werden. Es kann jedoch auch bis zum Ende des Zyklus, das heisst bis das gesamte Wasser verdunstet ist, im Becken belassen werden. Dadurch lässt sich das Verdunstungsbecken als Salzlager verwenden.

Die klimatischen Umweltbedingungen, das heisst die Umgebungstemperatur, die Luftfeuchtigkeit und die Windgeschwindigkeit werden gemessen und in einer Steuereinheit regelmässig ausgewertet. Diese Steuereinheit regelt die Ventile und/oder die Pumpen der Sprühleitung, um so die Menge der versprühten Salzsole diesen gemessenen Werten anzupassen und den Verdunstungsvorgang zu optimieren. Durch die Regelung der Durchflussmenge wird auch die Tröpfchengrösse des Sprühregens den klimatischen Bedingungen, insbesondere der Windeinwirkung, angepasst. Die Tröpfchengrösse und die Verteilung des Sprühregens lassen sich zudem durch die wahlweise Verwendung von verschieden geformten Sprühdüsen und die gezielte Aktivierung einzelner von mehreren, über dem Verdunstungsbecken verteilten Sprühdüsen wählen.

Die Menge der versprühten Salzsole wird bevorzugterweise jedoch auch entsprechend der zu erzielenden Rückkühlung der Abwärme geregelt. Hierfür wird der Grad der Rückkühlung, insbesondere die Temperatur des rückgekühlten Kühlwassers der Industrieanlage, gemessen und bei der Auswertung der gemessenen klimatischen Werte berücksichtigt. Die effektiv versprühte Menge an Salzsole hängt hauptsächlich von ökonomischen Berechnungen ab. Das heisst, einerseits wird die Steigerung der Salzgewinnung durch das Versprühen dem Energieverbrauch der Sprühanlage, insbesondere der Strom für die Pumpen, gegenübergestellt. Andererseits muss mindestens soviel Salzsole versprüht werden, damit der Anteil der Abwärme, welcher nicht über das Verdunstungsbecken reduziert werden kann, über die Sprühanlage abgeführt wird.

Das mindestens eine Verdunstungsbecken ist bevorzugterweise mit einer Oberflächendrainage, beispielsweise einem Ueberlaufwehr, für Regenwasser versehen. Das leichtere Regenwasser kann somit abfliessen, ohne sich allzu stark mit der Salzsole zu vermischen.

Im folgenden sind Beispiele aufgeführt, welche die gesteigerte Effizienz des erfindungsgemässen Verfahrens belegen:

### Beispiel 1:

Eine Anlage im Landesinnern weist eine Fläche von circa 34'000 m² (3.4 ha) und eine Tiefe von circa 2 m auf und ist in drei ungefähr gleich grosse Becken unterteilt. Würde diese Salzgewinnungsanlage lediglich mittels natürlicher Verdunstung durch Sonnen- und Windeinwirkung betrieben, würde die Salzproduktion bei circa 15'000 Tonnen pro Jahr liegen. Wird eine Abwärme von 20 MW zur Erwärmung der Salzsole im Verdunstungsbecken eingesetzt und wird die Salzsole mit einer Durchflussmenge von circa 450 m³/h durch den Wärmetauscher geleitet, so steigert sich die Salzgewinnung um 85'000 Tonnen pro Jahr. Wird ein Teil der durch den Wärmetauscher geleiteten, erwärmten Salzsole über dem Verdunstungsbecken versprüht, wobei die klimatischen Bedingungen berücksichtigt werden, so wird eine weitere Steigerung der Produktion um 55'000 Tonnen pro Jahr erzielt.

### Beispiel 2:

Eine Anlage wird unter folgenden klimatischen Bedingungen betrieben:
Temperatur: 10°C
Relative Luftfeuchtigkeit: 80%
Windgeschwindigkeit: 8 km/h

20 MW Abwärme wird an Salzsole weitergegeben, welche mit einer Durchflussmenge von 450 m³/h versprüht wird. Die dadurch zusätzlich verdunstende Wassermenge beträgt circa 7'500 kg/h, wobei dem System für die Verdunstung circa 5 MW zusätzliche Wärme entzogen worden ist. Aus diesem Zahlenbeispiel wird ersichtlich, dass nicht nur die Salzgewinnung wesentlich gesteigert werden kann, sondern dass zudem die Abfuhr der Abwärme der Industrieanlage selbst in kleinen Kühlteichen effizient erfolgt.

### Beispiel 3:

Dieselbe Anlage nach Beispiel 2 ist nun folgenden klimatischen Bedingungen ausgesetzt:
Temperatur: 35°C
Relative Luftfeuchtigkeit: 20%
Windgeschwindigkeit: 16 km/h

Die Abwärme kann bei diesen Bedingungen auch ohne Versprühen über das Verdunstungsbecken abgeführt werden. Werden zusätzlich 450 m³/h ungewärmte Salzsole versprüht, so beträgt die zusätzlich verdunstete Wassermenge circa 42'000 kg/h. Die zusätzlich umgewandelte Energie beträgt 28 MW. Die Salzgewinnung wird dadurch wesentlich gesteigert.

## Patentansprüche

1. Verfahren zur Gewinnung von Salz aus einer Salzsole (2) in mindestens einem offenen Verdunstungsbecken (1), wobei mindestens ein Teil der Salzsole (2) in eine ausserhalb des Verdunstungsbeckens angeordneten Heizeinheit (4) erwärmt wird und in das Verdunstungsbecken (2) zurückgebracht wird,
dadurch gekennzeichnet, dass
Klimawerte gemessen und in einer Steuereinheit ausgewertet werden und
dass mindestens ein Teil der erwärmten Salzsole mittels einer Sprühvorrichtung (6) über eines oder das mindestens eine Verdunstungsbecken (2) versprüht wird, wobei die Sprühmenge mittels der Steuereinheit entsprechend den gemessenen Klimawerten geregelt wird.

2. Verfahren nach Anspruch 1, dadurch gekennzeichnet, dass die Heizeinheit mittels der Abwärme einer Industrieanlage zwecks Rückkühlung betrieben wird, dass der Grad der Rückkühlung gemessen wird und dass dieser Wert bei der Regelung der Sprühmenge berücksichtigt wird.

3. Verfahren nach Anspruch 1, dadurch gekennzeichnet, dass Salzsole mit einer Konzentration von 3 bis 26 Gewichtsprozent Natriumchlorid (NaCl) verwendet wird.

4. Verfahren nach Anspruch 1, dadurch gekennzeichnet, dass die gesättigte Salzsole verwendet wird.

5. Verfahren nach Anspruch 1, dadurch gekennzeichnet, dass die Salzsole kontinuierlich mit variierender Durchflussmenge versprüht wird.

6. Verfahren nach Anspruch 1, dadurch gekennzeichnet, dass die Salzsole auf 35° bis 80°C erwärmt und anschliessend versprüht wird.

7. Verfahren nach Anspruch 1, dadurch gekennzeichnet, dass die Salzsole auf ungefähr 80°C erwärmt wird.

8. Verfahren nach Anspruch 1, dadurch gekennzeichnet, dass zusätzlich nicht erwärmte Salzsole über das mindestens eine Verdunstungsbecken (1) versprüht wird.

9. Vorrichtung zur Durchführung des Verfahrens nach einem der Ansprüche 1 bis 8 mit mindestens einem Verdunstungsbecken (1), einer mittels einer Zufuhrleitung und einer Rückführleitung damit verbundenen, mittels Abwärme betriebenen Heizeinheit (4), dadurch gekennzeichnet, dass die Heizeinheit über eine Sprühleitung (5) für erwärmte Sole mit einer über einem oder dem mindestens einem Verdunstungsbecken (1) angeordneten Sprühvorrichtung (6) verbunden ist,
dass Mittel zur Bestimmung von Klimawerten und des Grades der Rückkühlung der Abwärme und deren Weiterleitung an eine Steuereinheit vorhanden sind und
dass über die Steuereinheit regelbare Ventile und/oder Pumpen zur Regelung der Sprühmenge vorhanden sind.

## Claims

1. A process for extracting salt from brine (2) in at least one open evaporation basin (1), wherein at least a portion of the brine (2) is heated in a heating unit (4) arranged outside of the evaporation basin, and is returned to the evaporation basin (2), characterized in that
climatic values are measured and evaluated in a control unit, and
at least a portion of the heated brine is sprayed by means of a spraying device (6) over a or the at least one evaporation basin, wherein the amount of spray is regulated by means of the control unit in accordance with the measured climatic data.

2. The process in accordance with claim 1, characterized in that the heating unit is operated by means of the waste heat of an industrial plant for the purpose of recooling, that the degree of recooling is measured and that this value is taken into account when regulating the sprayed amount.

3. The process in accordance with claim 1, characterized in that the brine is used at a concentration of 3 to 26 weight percent of sodium chloride (NaCl).

4. The process in accordance with claim 1, characterized in that the saturated brine is used.

5. The process in accordance with claim 1, characterized in that the brine is continuously sprayed at various flow-through amounts.

6. The process in accordance with claim 1, characterized in that the brine is heated to 35° to 80°C and sprayed thereafter.

7. The process in accordance with claim 1, characterized in that the brine is heated to approximately 80°C.

8. The process in accordance with claim 1, characterized in that non-heated brine is sprayed over the at least one evaporation basin (1) in addition.

9. A device for executing the process in accordance with one of claims 1 to 8, having at least one evaporation basin (1), a heating unit (4), connected therewith by means of a feed line and a return line and operated by means of waste heat, characterized in that the heating unit is connected via a spray line (5) for heated brine with a spraying device (6) arranged over a or the at least one evaporation basin (1),
that means for determining climatic values and the degree of recooling of the waste heat and for passing them on to a control unit are provided, and
valves and/or pumps for regulating the amount sprayed are provided, which can be regulated by means of the control unit.

## Revendications

1. Procédé pour l'extraction de sel d'une saumure (2) dans au moins un bassin d'évaporation (1) ouvert, au moins une partie de la saumure (2) étant échauffée dans une unité de chauffage (4) placée en dehors du bassin d'évaporation et ramenée dans le bassin d'évaporation (2), **caractérisé en ce que** les valeurs climatiques sont mesurées et exploitées dans une unité de commande et **en ce qu'**au moins une partie de la saumure échauffée est pulvérisée sur un ou sur au moins le bassin d'évaporation (2) au moyen d'un dispositif de pulvérisation (6), la quantité pulvérisée étant réglée au moyen de l'unité de commande conformément aux valeurs climatiques mesurées.

2. Procédé selon la revendication 1, **caractérisé en ce que** l'unité de chauffage est exploitée au moyen de la chaleur perdue d'une installation industrielle pour le refroidissement de retour, **en ce que** le degré de réfrigération est mesuré et **en ce que** cette valeur est prise en compte lors du réglage de la quantité pulvérisée.

3. Procédé selon la revendication 1, **caractérisé en ce que** la saumure est utilisée avec une concentration de 3 à 26 pour-cent en poids de chlorure de sodium (NaCI).

4. Procédé selon la revendication 1, **caractérisé en ce que** la saumure saturée est utilisée.

5. Procédé selon la revendication 1, **caractérisé en ce que** la saumure est pulvérisée de façon continue avec des débits variants.

6. Procédé selon la revendication 1, **caractérisé en ce que** la saumure est échauffée de 35° à 80°C et est ensuite pulvérisée.

7. Procédé selon la revendication 1, **caractérisé en ce que** la saumure est échauffée à environ 80°C.

8. Procédé selon la revendication 1, **caractérisé en ce que** de la saumure non chauffée est en outre pulvérisée sur au moins l'un des bassins d'évaporation (1).

9. Dispositif pour la réalisation du procédé selon l'une des revendications 1 à 8, avec au moins un bassin d'évaporation (1), une unité de chauffage (4) exploitée par la chaleur perdue et qui y est raccordée au moyen d'une conduite d'alimentation et d'une conduite de retour, **caractérisé en ce que** l'unité de chauffage est raccordée à un dispositif de pulvérisation (6) placé sur un ou sur au moins le bassin d'évaporation (1) à l'aide d'une conduite de pulvérisation (5) de la saumure échauffée, **en ce que** des moyens de détermination de valeurs climatiques et du degré de refroidissement de la chaleur perdue et de sa transmission à une unité de commande sont disponibles et **en ce que** des soupapes et/ou pompes réglables par l'intermédiaire de l'unité de commande sont disponibles pour le réglage de la quantité pulvérisée.
